# EUROPÄISCHE PATENTANMELDUNG

(11) **EP 2 505 881 A1**
(43) Veröffentlichungstag der Anmeldung: **03.10.2012**
(21) Anmeldenummer: 11160447.6
(22) Anmeldetag: 30.03.2011
(51) Int. Cl.: F16J 15/00, F16J 15/32

(54) **Bürstendichtung für hohe Druckdifferenzen**

(71) Anmelder: SIEMENS AKTIENGESELLSCHAFT, 80333 München (DE)
(72) Erfinder: Flegler, Johan, 45131, Essen (DE)

(57) **Zusammenfassung**

Die Erfindung betrifft eine Dichtanordnung (1) zur Abdichtung eines Spalts zwischen einem rotierenden (4) und einem feststehenden (2) Bauteil, wobei eine Dichtanordnung (1) umfassend mehrere Bürstendichtungen (8) aufweist, wobei zumindest zwei Bürstendichtungen (8) direkt hintereinander angeordnet sind.

## Beschreibung

Die Erfindung betrifft eine Dichtanordnung zur Abdichtung eines Spalts zwischen einem rotierenden und einem feststehenden Bauteil, wobei die Dichtanordnung Bürstendichtungen aufweist, wobei eine Bürstendichtung jeweils mehrere Borsten umfasst, die endseitig miteinander kraftschlüssig oder formschlüssig verbunden sind. Neben berührungslosen Dichtungen, wie z.B. Labyrinthdichtungen, sind Bürstendichtungen bekannt und zeigen eine gegenüber den Labyrinthdichtungen verbesserte Dichteigenschaft.

Im Sinne dieser Anmeldung umfasst eine Bürstendichtung mehrere im Wesentlichen parallel zueinander angeordnete Borsten, die beispielsweise aus Draht bestehen können. Diese Borsten werden alle endseitig miteinander kraftschlüssig oder formschlüssig verbunden. Dies kann beispielsweise durch eine Schweißung erfolgen, bei der alle Borsten in der Bürstendichtung miteinander kraftschlüssig oder formschlüssig verschweißt werden. Des Weiteren können die Borsten endseitig zu einem Bürstenkernelementkopf gewickelt sein. Unter einer Bürstendichtung ist somit eine Einheit umfassend ein Borstenpaket und ein Bürstenkernelementkopf zu verstehen.

Zur allgemeinen Aufgabe der Bürstendichtungen gehört es, eine Leckageströmung zwischen einem rotierenden und einem feststehenden Bauteil zu minimieren. Da die Durchströmungsgeschwindigkeit der Leckageströmung vergleichsweise hoch ist in Folge von hohen Druckgefällen, können die Borsten der Bürstendichtungen durch Strömumgsphänomene zu Schwingungen angeregt werden. Diese Schwingungen führen zu einem erhöhten Verschleiß der einzelnen Borsten. Des Weiteren ist ein Brechen der Borsten möglich. Allerdings treten diese Schwingungen eher bei den stromauf oder stromab liegenden Borsten auf. Die im Borstenpaket mittig befindlichen Borsten werden durch die stromauf wie stromab liegenden Borsten geschützt, wodurch keine Schwingungen der in der Mitte befindlichen Borsten erfolgt.

Ein weiteres Problem ist, das wegen der großen Druckdifferenzen die stromab liegenden Borsten unter einer Stützplatte wegknicken, wodurch die Integrität der Dichtung gefährdet sowie die Lässigkeit erhöht wird.

Es sind verschiedene Ansätze bekannt, dieses Problem zu lösen. Ein Ansatz ist es, die Steifigkeit der Borsten derart anzupassen, dass eine Schwingungsanfachung vermieden oder herabgesetzt wird, wodurch die Borsten einer höheren Druckdifferenz standhalten können. Somit wird in der gesamten Bürstendichtung ein Borstenpaket ausgebildet, welches dadurch gekennzeichnet ist, dass die Borsten eine höhere Steifigkeit aufweisen. Solche Borsten sind durch einen größeren Draht bzw. Filamentdurchmesser gekennzeichnet. Problematisch ist hierbei, dass die Zwischenräume solcher Borstenpakete größer sind und so die Leckagereduktion vermindert wird. Weiter problematisch ist, dass ein steiferes Borstenpaket beim Anstreifen an einem Rotor einen größeren Schaden verursachen kann als dies bei einer weicheren Bürstendichtung der Fall ist.

Ein weiterer Ansatz die oben genannten Probleme zu lösen besteht darin, eine die Leckageströmung brechende Kontur auf dem Rotor anzuordnen, derart, dass die Strömung nicht ungehindert auf die Borsten auftreffen kann. Dies kann durch einen Wellenabsatz oder durch herkömmliche Dichtspitzen erfolgen. Dadurch wird der Verschleiß der stromauf liegenden Borsten vermindert, wodurch die Lebensdauer der Bürstendichtung erhöht wird.

Ein weiterer Ansatz ist in der DE 199 38 268 A1 offenbart, bei der eine Bürstendichtung mit flexiblen Front- und Rückplatten offenbart ist, bei der die Front- bzw. Rückplatten durch Bleche oder Borsten ausgebildet sind.

Die EP 0 992 721 A1 offenbart eine mehrstufige Bürstendichtung mit nachgiebigen Blechen zwischen den Bürsten.

Die US 2007/0063448 A1 offenbart ebenfalls eine Bürstendichtung, wobei hier Lamellen als Schütz- und Stützring eingesetzt werden.

Ein weiterer Ansatz besteht darin, mehrere Bürstendichtungen hintereinander anzuordnen. Allerdings ist bei solch einer Anordnung in der Regel eine Bürstendichtung deutlich höher belastet als die restlichen Bürstendichtungen in der gesamten Anordnung. Dies ruft wiederum die weiter oben beschriebenen Probleme hervor. Es sind auch hier Ansätze bekannt, dieses Phänomen zu lösen. Ein Einsatz ist in der DE 103 93 433 offenbart, bei der eine Bypass-Regelung zur gleichmäßigen Belastung von mehrstufigen Bürstendichtungen offenbart ist.

In der EP 1 892 442 A1 wird in der Bürstendichtung perforiertes Blech als Zwischenlage eingesetzt, das abrasive Eigenschaften aufweist.

Die US 5,106,104 offenbart eine Lösung, bei der der Spalt zwischen Rotor und Stützblech variiert, um dadurch eine gleichmäßige Belastung der einzelnen Bürsten zu erreichen.

Die Erfindung hat es sich zur Aufgabe gestellt, eine weitere Möglichkeit anzugeben, Schwingungen der einzelnen Borsten zu vermeiden.

Diese Aufgabe wird gelöst durch eine Dichtanordnung zur Abdichtung eines Spalts zwischen einem rotierenden und einem feststehenden Bauteil, wobei die Dichtanordnung Bürstendichtungen aufweist, wobei eine Bürstendichtung jeweils mehrere Borsten umfasst, die endseitig miteinander kraftschlüssig verbunden sind, wobei zumindest zwei Bürstendichtungen direkt hintereinander angeordnet sind.

Den im Stand der Technik angegebenen Dichtanordnungen ist gemeinsam, dass wenn zwei Bürstendichtungen eingesetzt werden, diese einen Abstand zueinander aufweisen. Es ist ein Merkmal dieser Erfindung, dass zwei Bürstendichtungen eingesetzt werden, die direkt benachbart zueinander angeordnet sind und sich aneinander anlegen können. Dadurch entsteht im Wesentlichen ein Borstenpaket höherer Breite.

Der Effekt ist, dass ein Druckgradient innerhalb der beiden Bürstendichtungen auf eine größere axiale Erstreckung ausgedehnt wird und somit die Belastung einzelner Bürstenbereiche abgemildert werden kann. Bei dieser erfindungsgemäßen Ausgestaltung ist es sogar möglich, die Stützplatten, die im Stand der Technik beschrieben sind, der stromauf liegenden Bürstendichtung ebenso wegzulassen, wie einen Schutzring, der stromab an der Bürstendichtung anliegt.

Vorteilhafte Weiterbildungen sind in den Unteransprüchen angegeben.

So werden in einer ersten vorteilhaften Weiterbildung die Borsten endseitig zu einem Bürstenkernelementkopf gewickelt. Es sei noch mal an dieser Stelle wiederholt, dass unter einer Bürstendichtung eine Anordnung umfassend ein Borstenpaket und ein Bürstenkernelementkopf zu verstehen ist, wobei im Bürstenkernelementkopf die Bürsten kraftschlüssig miteinander verbunden werden. In dieser ersten vorteilhaften Weitergestaltung ist diese kraftschlüssige Verbindung mittels einer Wicklung entstanden, die im Bürstenkernelementkopf angeordnet ist.

In einer weiteren vorteilhaften Weiterbildung sind die Borsten endseitig zu einem Bürstenkernelementkopf miteinander verschweißt. Dies ist als eine Alternative zur Wicklung zu betrachten. Die Borsten werden hierbei endseitig nicht miteinander verwickelt, sondern miteinander verschweißt. Dies kann das Herstellungsverfahren deutlich verkürzen und dadurch die Kosten für die Herstellung der Bürstendichtung reduzieren.

Dadurch, dass eine Bürstendichtung jeweils Borsten umfasst, die endseitig zu einem Bürstenkernelementkopf miteinander kraftschlüssig oder formschlüssig verbunden sind, weist die erfindungsgemäße Dichtanordnung, die sich durch zumindest zwei Bürstendichtungen auszeichnet, die direkt hintereinander angeordnet sind, zwei Bürstenkernelementköpfe auf. In einer vorteilhaften Weiterbildung werden diese Bürstenkernelementköpfe in einer gemeinsamen Nut angeordnet. Das bedeutet, dass im feststehenden oder im rotierenden Bauteil lediglich eine Nut angeordnet werden muss, was die Herstellungskosten signifikant reduzieren könnte. In einer vorteilhaften Weiterbildung ist ein Abstandshalter zwischen den zumindest zwei Bürstenkernelementköpfen angeordnet. Dieser kleine Abstand führt dazu, dass eine Entlastung für die stromauf liegenden Borsten erfolgt, wobei gleichzeitig ein radiales Bewegungsvermögen der stromab liegenden Borsten erhöht wird.

In vorteilhaften Weiterbildungen sind die Bürstendichtungen derart ausgebildet, dass die Borsten den gleichen oder einen unterschiedlichen Durchmesser aufweisen. Dadurch können anwendungsorientiert die Dichtigkeit für verschiedene Anwendungsfälle optimiert werden.

Durch die erfindungsgemäße Ausbildung der Dichtanordnung aus zumindest zwei direkt hintereinander benachbarten Bürstendichtungen ist eine axiale Bauraumlänge signifikant reduziert als gegenüber konventionellen Dichtanordnungen, die ebenfalls zumindest zwei Bürstendichtungen aufweisen. Es ist ebenso denkbar, mehrere erfindungsgemäße Dichtanordnungen zu verwenden, um eine Leckageströmung zwischen dem feststehenden und dem rotierenden Bauteil zu verringern. Dadurch kann eine Vereinheitlichung der Druckdifferenzen über den einzelnen Bürstendichtungen erreicht werden. Die Lebensdauer des gesamten Dichtungsbereichs wird dadurch erhöht. Die Vereinheitlichung der Druckdifferenzen beruht auf der Tatsache, dass die erfindungsgemäße Dichtanordnung durch den bekannten Blow-down-Effekt weniger stark beeinflusst wird, welcher in mehrstufigen Anordnungen die Verlustkoeffizienten der einzelnen Bürstendichtungen stark beeinflusst. Der Verlustkoeffizient einer Bürstendichtung nach der erfindungsgemäßen Ausführung ist dagegen in wesentlich geringerem Maße von den Phänomenen konventioneller Bürstendichtungen abhängig.

Ausführungsbeispiele der Erfindung werden nachfolgend anhand der Zeichnung beschrieben. Diese sollen die Ausführungsbeispiele nicht maßstäblich darstellen, vielmehr ist die Zeichnung in schematisierter und/oder leicht verzerrter Form ausgeführt. Im Hinblick auf Ergänzungen der aus der Zeichnung unmittelbar erkennbaren lehren wird hier auf den einschlägigen Stand der Technik verweisen.

Im Einzelnen zeigt die Zeichnung in
- Figur 1: eine Dichtanordnung umfassend zwei Bürstendichtungen mit gewickeltem Bürstenkernelementkopf;
- Figur 2: eine Dichtanordnung umfassend zwei Bürstendichtungen mit einem Bürstenkernelementkopf.

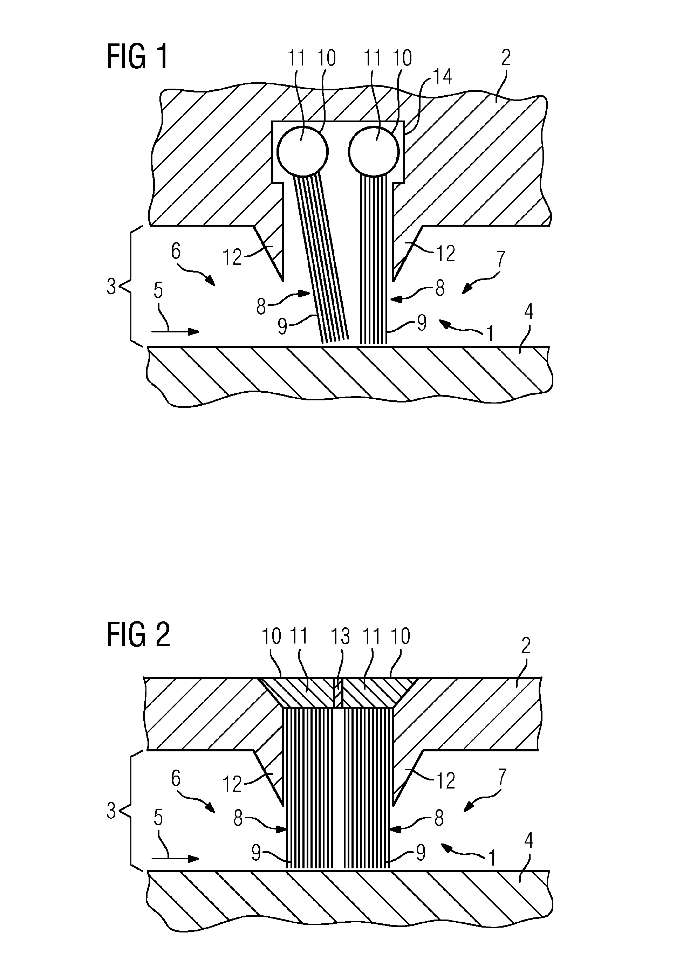

Die Figur 1 zeigt eine Dichtanordnung 1, die in einem feststehenden Bauteil 2 angeordnet ist. Diese Dichtanordnung 1 soll einen Spalt 3 zwischen dem feststehenden Bauteil 2 und einem rotierenden Bauteil 4 möglichst gut abdichten. Im Betrieb strömt ein Leckagestrom in einer Leckageströmungsrichtung 5. Diese Leckageströmungsrichtung 5 führt zu einem Bereich, in dem ein hoher Druck 6 und ein niedrigerer Druck 7 entsteht. Wobei die Druckdifferenz des hohen Drucks 6 zum niedrigen Druck 7 ursächlich ist für die Leckageströmung. Die Dichtanordnung 1 weist zumindest zwei Bürstendichtungen 8 auf. Eine Bürstendichtung 8 im Sinne dieser Anmeldung ist ein einheitliches Gebilde aus einer Ansammlung von drahtartigen Borsten 9, die im Wesentlichen parallel zu einander angeordnet sind. Diese Borsten 9 sind an einer endseitigen Stelle 10 kraftschlüssig miteinander verbunden. Diese Kraftschlüssigkeit kann durch eine Wicklung, wie sie in Figur 1 dargestellt ist oder durch eine Schweißung, wie sie in Figur 2 dargestellt ist, erfolgen. Beiden ist gemeinsam, dass jeweils ein Bürstenkernelementkopf 11, der an der endseitigen Stelle 10 angeordnet ist, ausgebildet ist. Eine Bürstendichtung 8 ist somit ein einheitliches Gebilde, das als Ganzes aus der Dichtanordnung 1 entfernt werden kann. Die Erfindung zeichnet sich nunmehr dadurch aus, dass zwei Bürstendichtungen 8 direkt hintereinander angeordnet sind. Das bedeutet, dass wie in Figur 1 dargestellt ist, kein weiteres Bauelement zwischen den zwei Bürstenkernelementköpfen 11 angeordnet ist. Die einzelnen Borsten 9 der Bürstendichtungen 8 können somit aneinander anliegen. Zwischen dem Bürstenkernelementkopf 11 und den Borsten 9 ist somit kein weiteres Bauteil angeordnet. Die Borsten liegen direkt aneinander an.

In der Ausführungsform gemäß Figur 1 und Figur 2 werden zusätzlich noch Stützplatten 12 angeordnet, die ein Wegknicken der Borsten 9 vermeiden können.

In der in Figur 2 dargestellten Ausführungsform ist zwischen den Bürstenkernelementköpfen 11 ein Abstandshalter 13 angeordnet. Die Borsten 9 der einzelnen Bürstendichtungen 8 können gleiche Durchmesser aufweisen. In alternativen Ausführungsformen können die Borsten 9 der Bürstendichtungen 8 unterschiedliche Durchmesser aufweisen.

Die Bürstendichtungen 8 sind hierbei derart ausgebildet, dass sie voneinander getrennt werden können. Das bedeutet, dass in eine Nut 14 zwei Bürstendichtungen 8 angeordnet werden können.

Die in Figur 2 dargestellte Ausführungsform der Dichtanordnung 1 zeigt zwei Bürstendichtungen 8, die an ihrer endseitigen Stelle 10 eine Schweißung aufweisen, an der die einzelnen Borsten 9 miteinander verbunden sind. Auch hier gilt zu der Figur 2 das weiter oben gesagte, dass die einzelne Bürstendichtung 8 getrennt von der nächsten Bürstendichtung 8 gelöst werden kann und dass zwischen den Bürstendichtungen 8 kein Abstand ist.

## Patentansprüche

1. Dichtanordnung (1) zur Abdichtung eines Spalts zwischen einem rotierenden (4) und einem feststehenden (2) Bauteil, wobei die Dichtanordnung (1) Bürstendichtungen (8) aufweist,
wobei eine Bürstendichtung (8) jeweils mehrere Borsten (9) umfasst, die endseitig miteinander kraftschlüssig oder formschlüssig verbunden sind,
**dadurch gekennzeichnet, dass**
zumindest zwei Bürstendichtungen (8) direkt hintereinander angeordnet sind.

2. Dichtanordnung (1) nach Anspruch 1,
wobei die Borsten (9) endseitig zu einem Bürstenkernelementkopf (11) gewickelt sind.

3. Dichtanordnung (1) nach Anspruch 1,
wobei die Borsten (9) endseitig zu einem Bürstenkernelementkopf (11) miteinander verschweißt sind.

4. Dichtanordnung (1) nach einem der vorhergehenden Ansprüche,
wobei zumindest zwei Bürstenkernelementköpfe (11) in einer gemeinsamen Nut (14) angeordnet sind.

5. Dichtanordnung (1) nach Anspruch 3,
wobei zwischen zwei Bürstenkernelementköpfen (11) ein Abstandshalter (13) angeordnet ist.

6. Dichtanordnung nach einem der vorhergehenden Ansprüche,
wobei die Borsten (9) der Bürstendichtungen (8) die gleichen Durchmesser aufweisen.

7. Dichtanordnung nach einem der vorhergehenden Ansprüche,
wobei die Borsten (9) der Bürstendichtungen (8) unterschiedliche Durchmesser aufweisen.
